# FASCICULE DE BREVET EUROPEEN

(11) **EP 3 961 506 B1**
(45) Date de publication et mention de la délivrance du brevet: **24.07.2024**
(21) Numéro de dépôt: 21179927.5
(22) Date de dépôt: 17.06.2021
(51) Int. Cl.: G06K 19/077, G06K 19/07, G06K 19/10

(54) **PROCÉDÉ DE VÉRIFICATION D'UNE CARTE À MICROCIRCUIT, PROCÉDÉ DE PERSONNALISATION D'UNE CARTE À MICROCIRCUIT, CARTE À MICROCIRCUIT ET DISPOSITIF ÉLECTRONIQUE ASSOCIÉ**
VERFAHREN ZUR ÜBERPRÜFUNG EINER MIKROSCHALTKREISKARTE, VERFAHREN ZUR PERSONALISIERUNG EINER MIKROSCHALTKREISKARTE, MIKROSCHALTKREISKARTE UND ENTSPRECHENDES ELEKTRONISCHES GERÄT
METHOD FOR VERIFYING A MICROCIRCUIT BOARD, METHOD FOR CUSTOMISING A MICROCIRCUIT BOARD, MICROCIRCUIT BOARD AND ASSOCIATED ELECTRONIC DEVICE

(30) Priorité: 25.08.2020 FR 2008681
(43) Date de publication de la demande: 02.03.2022
(73) Titulaire: IDEMIA France, 92400 Courbevoie (FR)
(72) Inventeur: EVANO, Jean-Michel, 92400 Courbevoie (FR); JACQUELIN, Stéphane, 92400 Courbevoie (FR)
(74) Mandataire: Idemia

(56) Documents cités:
- EP-A1- 0 451 024
- EP-A1- 1 727 080
- US-A1- 2007 253 251

## Description

La présente invention concerne le domaine technique des cartes à microcircuit.

Elle concerne plus particulièrement un procédé de vérification d'une carte à microcircuit logée dans un dispositif électronique, un procédé de personnalisation d'une carte à microcircuit, une carte à microcircuit et un dispositif électronique configuré pour loger une carte à microcircuit.

On connaît du document EP 451 024 une carte comportant un microcircuit et un support plastique avec une couche de matériau d'enregistrement. Une sécurisation de la carte est obtenue par l'établissement d'un code identificateur, qui est d'une part mis en mémoire du microcircuit et d'autre part détectable par analyse du support.

Par ailleurs, les téléphones mobiles présentent en général deux emplacements permettant de loger deux cartes à microcircuit. L'une de ces deux cartes à microcircuit comprend un module d'identification dans un réseau de téléphonie mobile, usuellement appelée « carte SIM ». L'autre des deux cartes peut comprendre, au choix une autre carte SIM ou une carte comprenant un module de mémoire, généralement une carte « micro SD ».

On connaît des cartes à microcircuit comprenant à la fois un module d'identification dans un réseau de téléphonie mobile et un module de mémoire. L'utilisation de telles cartes est avantageuse car elle permet de diversifier les possibilités d'utilisation des emplacements des téléphones mobiles. De telles cartes à microcircuit sont par exemple décrites dans les documents US 2007/253 251 et EP 1 727 080.

Dans ce contexte, l'invention propose un procédé de vérification d'une carte à microcircuit logée dans un dispositif électronique, la carte à microcircuit comprenant un module d'identification dans un réseau de téléphonie mobile mémorisant une première donnée, et un module de mémoire mémorisant une deuxième donnée, le procédé comprenant une étape de vérification que la première donnée et la deuxième donnée répondent à une règle prédéterminée.

On s'assure ainsi que le module d'identification et le module de mémoire de la carte à microcircuit sont bien ceux initialement prévus sur la carte à microcircuit et sont bien configurés comme prévu par le concepteur et/ou le fabricant de la carte à microcircuit.

En pratique, le procédé peut comprendre une étape de réception, par le dispositif électronique et en provenance du module d'identification, d'une trame de données ; ladite première donnée peut alors être située à un emplacement défini dans la trame de données reçue.Le procédé peut comprendre par ailleurs une étape de lecture de la deuxième donnée à un emplacement prédéterminé d'une table de données mémorisée dans le module de mémoire.

On peut prévoir en outre que le procédé comprenne une étape de blocage de la carte à microcircuit (et/ou une étape d'affichage d'un message d'erreur) si la première donnée et la deuxième donnée ne répondent pas à la règle prédéterminée.

La vérification peut consister par exemple en pratique à déterminer si la première donnée est égale à la deuxième donnée.

La première donnée est par exemple mémorisée dans le module d'identification au sein d'une zone mémoire non modifiable par l'utilisateur (autrement dit, accessible en lecture seule par l'utilisateur).

La seconde donnée peut par ailleurs être mémorisée dans le module de mémoire au sein d'une zone mémoire non modifiable par l'utilisateur (autrement dit, accessible en lecture seule par l'utilisateur).

L'invention propose également un procédé de personnalisation d'une carte à microcircuit comprenant un module d'identification dans un réseau de téléphonie mobile et un module de mémoire**,** le procédé comprenant des étapes de :
- récupération d'une donnée mémorisée dans le module mémoire,
- enregistrement, au sein du module d'identification, de la donnée mémorisée récupérée.

La donnée mémorisée récupérée peut en pratique être enregistrée dans une zone de mémorisation dédiée à un emplacement défini dans une trame de données à émettre.

L'invention propose aussi un procédé de personnalisation d'une carte à microcircuit comprenant un module d'identification dans un réseau de téléphonie mobile et un module de mémoire, le procédé comprenant des étapes de :
- récupération d'une donnée mémorisée dans le module d'identification,
- enregistrement de la donnée mémorisée récupérée dans un emplacement prédéterminé d'une table de données mémorisée dans le module de mémoire.

L'invention propose par ailleurs une carte à microcircuit comprenant un module d'identification dans un réseau de téléphonie mobile mémorisant une première donnée, et un module de mémoire mémorisant une deuxième donnée, dans laquelle la première donnée et la deuxième donnée répondent à une règle prédéterminée.

Selon un mode de réalisation envisageable, la première donnée et la seconde donnée peuvent être identiques. En variante, la première donnée et la seconde donnée vérifient une relation particulière.

L'invention propose enfin un dispositif électronique configuré pour loger une carte à microcircuit, la carte comprenant un module d'identification dans un réseau de téléphonie mobile mémorisant une première donnée, et un module de mémoire mémorisant une deuxième donnée, le dispositif électronique incluant ladite carte à microcircuit et comprenant un processeur programmé pour vérifier que la première donnée et la deuxième donnée répondent à une règle prédéterminée.

Ce dispositif électronique et/ou cette carte à microcircuit peuvent inclure en outre certaines des caractéristiques optionnelles présentées ci-dessus en termes de procédé.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
- la figure 1 représente schématiquement une carte à microcircuit conforme à l'invention,
- la figure 2 est un logigramme présentant un premier procédé envisageable pour personnaliser la carte à microcircuit de la figure 1,
- la figure 3 est un logigramme présentant un second procédé envisageable pour personnaliser la carte à microcircuit de la figure 1,
- la figure 4 présente schématiquement un dispositif électronique équipé de la carte à microcircuit de la figure 1, et
- la figure 5 est un logigramme présentant un procédé de vérification de carte à microcircuit selon l'invention.

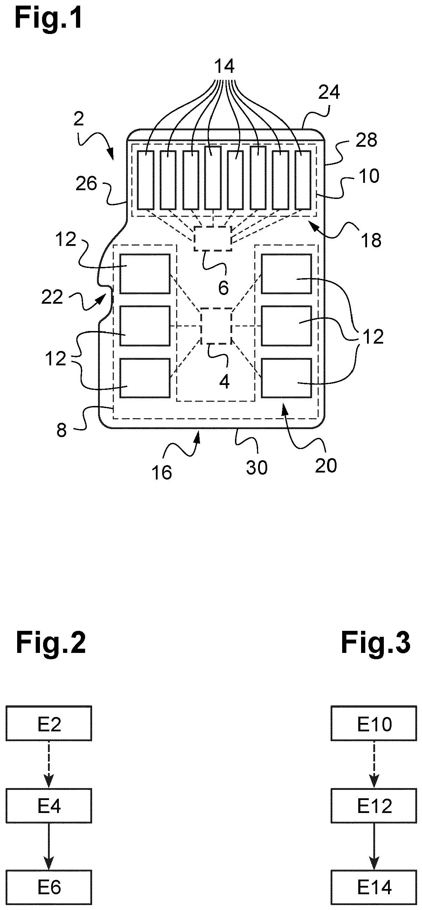

La carte à microcircuit 2 représentée sur la figure 1 comprend un module d'identification dans un réseau de téléphonie mobile 4 (ou module SIM pour *"Subscriber Identity Module",* c'est-à-dire module d'identité d'abonné), un module de mémoire 6, une première interface 8 et une seconde interface 10.

Ces différents éléments sont portés par un support 16 (réalisé en matière plastique), de forme généralement rectangulaire et décrit plus loin.

La carte à microcircuit 2 (et donc en pratique le support 16) présente par exemple une épaisseur comprise entre 0,5 mm et 0,9 mm (de préférence entre 0,6 mm et 0,8 mm).

Le module d'identification 4 mémorise par exemple une clé cryptographique utilisée notamment au cours d'un processus d'authentification lors de l'établissement d'une connexion dans le réseau de téléphonie mobile concerné.

La première interface 8 est conçue pour établir une connexion entre le module d'identification 4 et un dispositif électronique externe, comme expliqué dans la suite.

La première interface 8 comprend ici une pluralité de plots de contact 12 (précisément ici six plots de contact 12) affleurant à la surface du support 16. Dans l'exemple décrit, les plots de contact 12 sont répartis en deux rangées (ici donc deux rangées de trois plots de contact 12) espacées (typiquement de plus de 2 mm).

La première interface 8 est ici réalisée conformément à la norme *"ETSI TS 102 221 V15.0.0 Smart Cards; UICC terminal interface; Physical and logical characteristics".* Dans ce contexte notamment, chaque plot de contact 12 a une largeur comprise entre 2 mm et 2,2 mm et une longueur comprise entre 2,3 mm et 2,5 mm. Par ailleurs, l'espacement entre rangées susmentionné peut alors être compris entre 4,6 mm et 5,6 mm.

Comme visible sur la figure 1, les plots de contact 12 d'une même rangée sont ici alignés et deux plots de contact 12 voisins dans une même rangée sont espacés d'une distance comprise entre 0,3 mm et 0,6 mm (de préférence entre 0,4 mm et 0, 5 mm).

Le module d'identification 4 est relié à certains au moins des plots de contact 12 de la première interface 8 afin de pouvoir établir une connexion avec un dispositif électronique externe comme déjà mentionné (en général en pratique avec un processeur de ce dispositif électronique externe) et ainsi échanger des données avec ce dispositif électronique externe (c'est-à-dire en pratique avec le processeur de ce dispositif électronique externe).

La seconde interface 10 est conçue pour établir une connexion entre le module de mémoire 6 et le dispositif électronique externe déjà mentionné, comme expliqué dans la suite.

La seconde interface 10 comprend ici une pluralité de plots de contact 14 (précisément ici huit plots de contact 14) affleurant à la surface du support 16. Dans l'exemple décrit, les plots de contact 14 sont alignés le long d'un bord 24 (désigné bord avant 24 dans la suite) du support 16.

La seconde interface 10 est ici réalisée conformément à la spécification *"Physical Loyer Spécification Ver 3.0"* émise par l'organisme *"SD Card Association".* Dans ce cas notamment, deux plots de contact 14 voisins sont par exemple espacés d'une distance comprise entre 0,1 mm et 0,5 mm.

Le module de mémoire 6 est relié électriquement à une certains au moins des plots de contact 14 de la seconde interface 10 afin de pouvoir établir une connexion avec un dispositif électronique externe comme déjà mentionné (en général en pratique avec un processeur de ce dispositif électronique externe) et ainsi échanger des données avec ce dispositif électronique externe (c'est-à-dire en pratique avec le processeur de ce dispositif électronique externe).

Le support 16 comprend une région avant 18 et une région arrière 20. (Les directions avant et arrière visent seulement la clarté de l'exposé, l'avant correspondant aux régions situées vers le haut sur la figure 1.)

La région avant 18 porte les plots de contact 14 de la seconde interface 10 et se termine (vers l'avant) par le bord avant 24. La région arrière 20 porte quant à elle les plots de contact 12 de la première interface 8.

Le support 16 présente un premier bord latéral 26 (à gauche sur la figure 1) et un second bord latéral 28 (à droite sur la figure 1) qui s'étendent chacun du bord avant 24 à un bord arrière 30.

Le support 16 présente, au niveau de la région avant 18, une première largeur (c'est-à-dire une première distance entre les bords latéraux 26, 28) et, au niveau de la région arrière 20, une seconde largeur (c'est-à-dire une seconde distance entre les bords latéraux 26, 28), la seconde largeur étant ici supérieure à la première largeur (autrement dit : la seconde distance étant supérieure à la première distance).

Afin notamment de répondre à la spécification précitée, la première largeur (ou première distance) est par exemple comprise entre 9 mm et 10,4 mm et/ou la seconde largeur (ou seconde distance) est par exemple comprise entre 10, 5 mm et 11,5 mm. La longueur du support 16 (c'est-à-dire la distance entre le bord avant 24 et le bord arrière 30) est quant à elle par exemple comprise dans ce cas entre 14,5 mm et 15,5 mm.

Comme visible sur la figure 1, le second bord latéral 28 est droit (ou rectiligne). Le premier bord latéral 26 comprend quant à lui une première partie rectiligne au niveau de la région avant 18, une seconde partie rectiligne au niveau de la région arrière 20 et une partie coudée entre la première partie rectiligne et la seconde partie rectiligne.

Le premier bord latéral 26 définit en outre ici un renfoncement 22 (formé en pratique par un évidement dans la seconde partie rectiligne susmentionnée) au niveau de la région arrière 20.

La figure 2 présente sous forme d'un logigramme un premier procédé envisageable pour personnaliser la carte à microcircuit 2.

Selon ce procédé, le module de mémoire 6 est personnalisé au préalable au cours d'une étape E2. Cette étape E2 est par exemple réalisée au moyen d'un dispositif électronique du fabricant du module de mémoire 6, ce dispositif électronique étant en communication avec le module de mémoire 6 via la seconde interface 10 décrite ci-dessus.

Lors de cette étape E2 sont donc inscrites dans le module de mémoire 6 des données utilisables ultérieurement pour le fonctionnement du module de mémoire 6. En particulier, une donnée dénommée dans la suite *"donnée de vérification"* est inscrite à un emplacement prédéterminé d'une table de données. Cet emplacement peut en pratique être situé dans une zone mémoire non modifiable par l'utilisateur (c'est-à-dire accessible en lecture seule pour l'utilisateur).

Dans l'exemple décrit ici, l'emplacement prédéterminé est un emplacement dédié au numéro de série (champ PSN) dans la table d'identification de carte (table CID pour *"Card Identification*")*.* A titre d'exemple, la donnée de vérification inscrite (à l'étape E2) à cet emplacement est la suite d'octets (ici une suite de quatre octets) : 64411931h (h indiquant une notation hexadécimale).

Les étapes ultérieures E4 et E6 décrites ci-dessous sont quant à elles mises en oeuvre ultérieurement, lors de la personnalisation du module d'identification 4 au moyen d'un dispositif électronique dédié (par exemple une machine de personnalisation), en général distinct du dispositif électronique du fabricant mentionné plus haut.

Ce dispositif électronique dédié est en communication avec le module de mémoire 6 au moyen de la seconde interface 10 et en communication avec le module d'identification 4 au moyen de la première interface 8.

Le procédé de la figure 2 comprend alors une étape E4 de récupération de la donnée de vérification mémorisée dans le module de mémoire 6, ici par lecture de cette donnée de vérification à l'emplacement prédéterminé de la table de données susmentionnée (cette lecture étant effectuée par le dispositif électronique dédié, en charge de personnaliser le module d'identification 4). La donnée lue vaut ici : 64411931h, comme déjà indiqué.

Le procédé de la figure 2 comprend ensuite une étape E6 d'enregistrement (c'est-à-dire d'écriture), au sein du module d'identification 4, de la donnée de vérification récupérée à l'étape E4, cet enregistrement étant effectué dans une zone de mémorisation dédiée à un emplacement défini dans une trame de données à émettre.

Dans l'exemple décrit ici, cette zone de mémorisation est celle où sont mémorisées dans le module d'identification 4 les données de pré-émission (en anglais *"pre-issuing data*") contenues dans les octets historiques de la réponse à initialisation (en anglais *"Answer To Reset"* ou ATR) fournie par le module d'identification 4 selon la norme ISO7816.

Cette zone de mémorisation peut en pratique être située dans une zone mémoire non modifiable par l'utilisateur (c'est-à-dire accessible en lecture seule pour l'utilisateur).

La figure 3 présente sous forme d'un logigramme un second procédé envisageable pour personnaliser la carte à microcircuit 2.

Selon ce procédé, le module d'identification 4 est personnalisé au préalable lors d'une étape E10, par exemple par une machine de personnalisation du fabricant du module d'identification 4 ou d'une machine de personnalisation exploitée pour le compte de l'opérateur téléphonique (opérateur téléphonique gérant le réseau de téléphonie mobile associé au module d'identification 4).

Cette machine de personnalisation est alors en communication avec le module d'identification 4 via la première interface 8.

Lors de cette étape E10 sont donc inscrites dans le module d'identification 4 des données utilisables ultérieurement pour le fonctionnement du module d'identification 4. En particulier, une donnée dénommée dans la suite *"donnée de vérification"* est inscrite dans une zone de mémorisation dédiée à un emplacement défini dans une trame de données à émettre. Cette zone de mémorisation peut en pratique être située dans une zone mémoire non modifiable par l'utilisateur (c'est-à-dire accessible en lecture seule pour l'utilisateur).

Dans l'exemple décrit ici, cette zone de mémorisation est celle où sont mémorisées dans le module d'identification 4 les données de pré-émission (en anglais *"pre-issuing data*") contenues dans les octets historiques de la réponse à initialisation (en anglais *"Answer To Reset"* ou ATR) fournie par le module d'identification 4 selon la norme ISO7816.

A titre d'exemple, sont mémorisés lors de cette étape E10 les quatre octets suivants : 64411931h en tant que (quatre) premiers octets des données de pré-émission. Le premier octet de ces quatre octets, ici de valeur 64h, correspond ici en outre à l'étiquette (en anglais *"tag*") 6h indicative des données de pré-émission et à la longueur (en anglais *"length*") 4h des données de pré-émission, conformément à la norme ISO7816.

Les étapes ultérieures E12 et E14 décrites ci-dessous sont quant à elles mises en oeuvre ultérieurement, lors de la personnalisation du module de mémoire 6 au moyen d'un dispositif électronique dédié, en général distinct de la machine de personnalisation mentionnée plus haut.

Ce dispositif électronique dédié est en communication avec le module de mémoire 6 au moyen de la seconde interface 10 et en communication avec le module d'identification 4 au moyen de la première interface 8.

Le procédé de la figure 3 comprend alors une étape E12 de récupération de la donnée de vérification mémorisée dans le module d'identification 4.

Dans l'exemple décrit ici, cette étape E12 est réalisée (au moyen du dispositif électronique dédié) par initialisation du module d'identification 4, réception d'une trame de données (ici la réponse à initialisation) émise par le module d'identification 4, et extraction, dans cette trame de données, de la donnée de vérification (cette donnée de vérification étant située à un emplacement défini de la trame de données, cet emplacement étant ici celui des données de pré-émission contenues dans les octets historiques de la réponse à initialisation, précisément celui des quatre premiers octets des données de pré-émission).

Les octets récupérés (extraits) sont ici les octets suivants : 64411931h.

Le procédé de la figure 3 comprend alors une étape E14 d'enregistrement (c'est-à-dire d'écriture) de la donnée de vérification dans un emplacement prédéterminé d'une table de données mémorisée dans le module de mémoire 4. Cet emplacement peut en pratique être situé dans une zone mémoire non modifiable par l'utilisateur (c'est-à-dire accessible en lecture seule pour l'utilisateur).

Dans l'exemple décrit ici, l'emplacement prédéterminé est un emplacement dédié au numéro de série (champ PSN) dans la table d'identification de carte (table CID pour *"Card Identification*")*.* La donnée de vérification enregistrée à cet emplacement est selon l'exemple précité la suite d'octets : 64411931h.

Le procédé de la figure 2 et le procédé de la figure 3 permettent ainsi que la carte à microcircuit 2 mémorise la même donnée de vérification :
- dans le module d'identification 4, dans la zone de mémorisation dédiée à l'emplacement défini dans la trame de données à émettre par le module d'identification 4 ;
- à l'emplacement prédéterminé de la table de données mémorisée dans le module de mémoire 6.

En variante, on pourrait prévoir qu'une première donnée de vérification mémorisée dans ladite zone de mémorisation du module d'identification 4 et une seconde donnée de vérification mémorisation à l'emplacement prédéterminé de la table de données mémorisée dans le module de mémoire 6 soient différentes, mais répondent à une règle prédéterminée. A titre d'exemple, une telle règle prédéterminée pourrait être que la combinaison par ou exclusif (ou XOR) de la première donnée et de la seconde donnée vaut zéro.

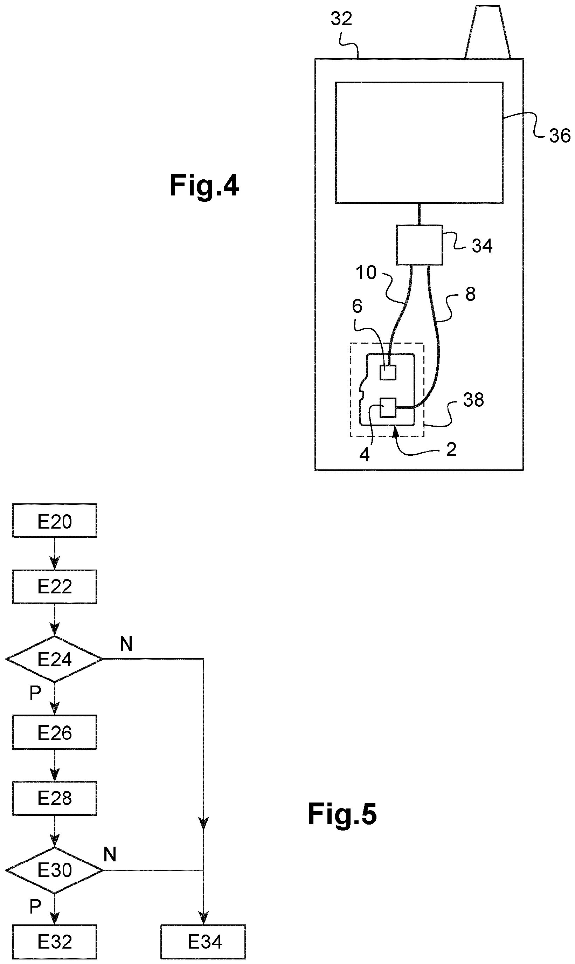

La figure 4 présente schématiquement un dispositif électronique 32 équipé de la carte à microcircuit 2.

Ce dispositif électronique 32 est ici un terminal mobile multifonction (parfois désigné par l'appellation *"ordiphone"* ou téléphone intelligent, ce dernier terme étant calqué sur l'expression anglaise *"smartphone*")*.* Il pourrait toutefois s'agir en variante d'un autre type de dispositif électronique, par exemple un module télématique équipant un véhicule automobile.

Le dispositif électronique 32 comprend un processeur 34, une interface utilisateur 36 (ici un écran, par exemple un écran tactile) et un lecteur de carte 38.

Le lecteur de carte 38 comprend un logement conçu pour accueillir la carte à microcircuit 2 et des bornes de contact (non représentées) conçues pour coopérer d'une part avec les plots de contact 12 de la première interface 8 et d'autre part avec les plots de contact 14 de la seconde interface 10.

Ces bornes de contact permettent de relier électriquement et séparément la première interface 8 et la seconde interface 10 au processeur 34.

Ainsi, lorsque la carte à microcircuit 2 est logée dans le lecteur de carte 38, le processeur 34 peut échanger des données avec le module d'identification 4 via la première interface 8 et, indépendamment, avec le module de mémoire 6 via la seconde interface 10.

Le processeur 34 est par ailleurs relié à l'interface utilisateur 36 et peut notamment commander l'affichage de messages destinés à l'utilisateur sur cette interface utilisateur 36 (ici sur l'écran déjà mentionné).

La figure 5 présente un exemple de procédé de vérification de la carte à microcircuit 2 par le dispositif électronique 32.

Ce procédé débute par une étape E20 de réinitialisation du module d'identification 4 par le processeur 34. Comme déjà indiqué, le module d'identification 4 est ici conforme à la norme ISO7816 et la réinitialisation du module d'identification 4 est dans ce cas effectuée par application, par le processeur 34, d'une tension prédéfinie sur le plot de contact RST de la première interface 8.

Le dispositif électronique 32 (ici précisément son processeur 34) reçoit alors à l'étape E22 une trame de données (ici la réponse à initialisation, ou ATR pour *"Answer To Reset",* prévue par la norme ISO7816) en provenance du module d'identification 4.

Cette réponse à initialisation a par exemple la forme suivante (en hexadécimal) :
3B 9F 96 80 1F C6 80 31E0 73FE211B 6441193100 829000 A9.

Dans l'exemple décrit ici, le processeur 34 vérifie tout d'abord que le premier octet des octets historiques (*"historical bytes"* en anglais) de la réponse à initialisation est bien égal à 80h (étape E24), c'est-à-dire que la réponse à initialisation est bien au format attendu (qui permettra d'extraire la première donnée comme expliqué plus bas).

Dans la négative (flèche N en figure 5), le procédé se poursuit à l'étape E34 de traitement d'erreur décrite plus bas.

Si la vérification de l'étape E24 est positive (ce qui est le cas dans l'exemple de réponse à initialisation donné ci-dessus), le procédé se poursuit (via la flèche P en figure 5) par une étape E26 à laquelle le processeur 34 extrait une première donnée située à un emplacement défini dans la trame de données reçue. La première donnée extraite correspond ici aux quatre premiers octets parmi les données de pré-émission ("pre-*issuing data"* en anglais) de la réponse à initialisation.

Dans l'exemple de réponse à initialisation donné ci-dessus, les données de pré-émission sont signalées par l'octet 64h (qui indique en outre une longueur de quatre octets pour ces données de pré-émission). Le processeur 34 extrait dans ce cas en tant que première donnée les octets suivants : 64411931h (quatre octets y compris l'octet de signalisation 64h).

Le processeur 34 procède alors à l'étape E28 à la lecture d'une deuxième donnée à un emplacement prédéterminé d'une table de données mémorisée dans le module de mémoire 6. Ici, cette table de données est la table d'identification de carte (table CID pour *"Card Identification*") et/ou l'emplacement prédéterminé est l'emplacement dédié au numéro de série (champ PSN).

Comme décrit plus haut, la deuxième donnée vaut ainsi ici : 64411931h.

Le processeur 34 peut alors procéder à une étape E30 de vérification que la première donnée et la deuxième donnée répondent à une règle prédéterminée.

Ici, la vérification consiste à déterminer si la première donnée est égale à la deuxième donnée (ce qui est effectivement le cas dans l'exemple ci-dessus). En variante, on pourrait vérifier une autre relation entre la première donnée et la deuxième donnée. Comme déjà indiqué, on pourrait vérifier par exemple que la combinaison par ou exclusif de la première donnée et de la seconde donnée est nulle.

En cas de vérification positive (flèche P en figure 5), le fonctionnement du dispositif électronique 32 peut se poursuivre normalement à l'étape E32. Ce fonctionnement normal comprend par exemple la poursuite de la phase d'initialisation et/ou toute étape de mise en fonctionnement du dispositif électronique 32.

En revanche, en cas d'échec à l'étape de vérification E30 (flèche N en figure 5), le processeur 34 met en oeuvre une étape E34 de traitement d'erreur. En effet, on considère ici qu'il s'agit dans ce cas d'une carte à microcircuit qui n'a pas été produite selon le processus de production et de personnalisation prévu, et cela peut dans certains cas entraîner un risque pour le fonctionnement du dispositif électronique 32.

L'étape de traitement d'erreur E34 comprend par exemple (sur commande du processeur 34) l'affichage d'un message d'erreur sur l'interface utilisateur 36.

L'étape de traitement d'erreur E34 peut également comprendre (sur commande du processeur 34) le blocage de la carte à microcircuit 2.

En pratique, ce blocage peut comprendre le blocage du fonctionnement (par exemple par absence d'alimentation électrique) du module d'identification 4 et/ou le blocage du fonctionnement (par exemple par absence d'alimentation électrique) du module de mémoire 6.

D'autres types de blocage peuvent être envisagés en complément ou en variante :
- blocage du dispositif électronique 32 jusqu'à ce que la carte à microcircuit 2 soit retirée du lecteur de carte 38 ;
- blocage du terminal (même en cas de retrait de la carte à microcircuit 2 du lecteur de carte 38) ;
- blocage de l'accès au réseau de téléphonie associé au module d'identification 4 ou blocage de l'accès à tout réseau de téléphonie ;
- mémorisation, au sein du dispositif électronique 32, de l'interdiction d'utiliser le module d'identification 4 ;
- blocage temporaire de l'ensemble des lecteurs de carte.

## Revendications

1. Procédé de vérification d'une carte à microcircuit (2) logée dans un dispositif électronique (32), la carte à microcircuit (2) comprenant un module d'identification dans un réseau de téléphonie mobile (4) mémorisant une première donnée, et un module de mémoire (6) mémorisant une deuxième donnée, le procédé comprenant une étape de vérification (E30) que la première donnée et la deuxième donnée répondent à une règle prédéterminée.

2. Procédé de vérification selon la revendication 1, comprenant une étape de réception (E22), par le dispositif électronique (32) et en provenance du module d'identification (2), d'une trame de données, ladite première donnée étant située à un emplacement défini dans la trame de données reçue.

3. Procédé de vérification selon l'une des revendications 1 ou 2, comprenant une étape de lecture (E28) de la deuxième donnée à un emplacement prédéterminé d'une table de données mémorisée dans le module de mémoire (6).

4. Procédé selon l'une des revendications 1 à 3, comprenant une étape de blocage de la carte à microcircuit (2) si la première donnée et la deuxième donnée ne répondent pas à la règle prédéterminée.

5. Procédé de vérification selon l'une des revendications 1 à 4, dans lequel la vérification (E30) consiste à déterminer si la première donnée est égale à la deuxième donnée.

6. Procédé de personnalisation d'une carte à microcircuit (2) comprenant un module d'identification dans un réseau de téléphonie mobile (4) et un module de mémoire (6), le procédé comprenant des étapes de :
- récupération (E4) d'une donnée mémorisée dans le module mémoire (6),
- enregistrement (E6), au sein du module d'identification (4), de la donnée mémorisée récupérée.

7. Procédé selon la revendication 6, dans laquelle la donnée mémorisée récupérée est enregistrée dans une zone de mémorisation dédiée à un emplacement défini dans une trame de données à émettre.

8. Procédé de personnalisation d'une carte à microcircuit (2) comprenant un module d'identification dans un réseau de téléphonie mobile (4) et un module de mémoire (6), le procédé comprenant des étapes de :
- récupération (E12) d'une donnée mémorisée dans le module d'identification (4),
- enregistrement (E14) de la donnée mémorisée récupérée dans un emplacement prédéterminé d'une table de données mémorisée dans le module de mémoire (6).

9. Carte à microcircuit (2) comprenant un module d'identification dans un réseau de téléphonie mobile (4) mémorisant une première donnée, et un module de mémoire (6) mémorisant une deuxième donnée, dans laquelle la première donnée et la deuxième donnée répondent à une règle prédéterminée.

10. Carte à microcircuit selon la revendication 9, dans laquelle la première donnée et la seconde donnée sont identiques.

11. Dispositif électronique (32) configuré pour loger une carte à microcircuit (2), la carte comprenant un module d'identification dans un réseau de téléphonie mobile (4) mémorisant une première donnée, et un module de mémoire (6) mémorisant une deuxième donnée, le dispositif électronique (32) incluant ladite carte à microcircuit (2) et comprenant un processeur (34) programmé pour vérifier que la première donnée et la deuxième donnée répondent à une règle prédéterminée.

## Patentansprüche

1. Verfahren zur Überprüfung einer in einer elektronischen Vorrichtung (32) untergebrachten Mikroschaltungskarte (2), wobei die Mikroschaltungskarte (2) ein Modul (4) zur Identifizierung in einem Mobilfunknetz, das einen ersten Datenwert speichert, und ein Speichermodul (6) enthält, das einen zweiten Datenwert speichert, wobei das Verfahren einen Schritt der Überprüfung (E30) enthält, dass der erste Datenwert und der zweite Datenwert einer vorbestimmten Regel entsprechen.

2. Überprüfungsverfahren nach Anspruch 1, das einen Schritt des Empfangs (E22) eines Datenrahmens durch die elektronische Vorrichtung (32) und vom Identifizierungsmodul (2) kommend enthält, wobei der erste Datenwert sich an einer definierten Stelle im empfangenen Datenrahmen befindet.

3. Überprüfungsverfahren nach einem der Ansprüche 1 oder 2, das einen Schritt des Lesens (E28) des zweiten Datenwerts an einer vorbestimmten Stelle einer im Speichermodul (6) gespeicherten Datentabelle enthält.

4. Verfahren nach einem der Ansprüche 1 bis 3, das einen Schritt des Blockierens der Mikroschaltungskarte (2) enthält, wenn der erste Datenwert und der zweite Datenwert nicht der vorbestimmten Regel entsprechen.

5. Überprüfungsverfahren nach einem der Ansprüche 1 bis 4, wobei die Überprüfung (E30) darin besteht, festzustellen, ob der erste Datenwert gleich dem zweiten Datenwert ist.

6. Verfahren zur Personalisierung einer Mikroschaltungskarte (2), die ein Modul (4) zur Identifizierung in einem Mobilfunknetz und ein Speichermodul (6) enthält, wobei das Verfahren folgende Schritte enthält:
- Abrufen (E4) eines im Speichermodul (6) gespeicherten Datenwerts,
- Abspeichern (E6) des abgerufenen gespeicherten Datenwerts innerhalb des Identifizierungsmoduls (4) .

7. Verfahren nach Anspruch 6, wobei der abgerufene gespeicherte Datenwert in einem Speicherbereich abgespeichert wird, der einer in einem zu sendenden Datenrahmen definierten Stelle zugeordnet ist.

8. Verfahren zur Personalisierung einer Mikroschaltungskarte (2), die ein Modul (4) zur Identifizierung in einem Mobilfunknetz und ein Speichermodul (6) enthält, wobei das Verfahren folgende Schritte enthält:
- Abrufen (E12) eines im Identifizierungsmodul (4) gespeicherten Datenwerts,
- Abspeichern (E14) des abgerufenen gespeicherten Datenwerts an einer vorbestimmten Stelle einer im Speichermodul (6) gespeicherten Datentabelle.

9. Mikroschaltungskarte (2), die ein Modul (4) zur Identifizierung in einem Mobilfunknetz, das einen ersten Datenwert speichert, und ein Speichermodul (6) enthält, das einen zweiten Datenwert speichert, wobei der erste Datenwert und der zweite Datenwert einer vorbestimmten Regel entsprechen.

10. Mikroschaltungskarte nach Anspruch 9, wobei der erste Datenwert und der zweite Datenwert gleich sind.

11. Elektronische Vorrichtung (32), die konfiguriert ist, eine Mikroschaltungskarte (2) aufzunehmen, wobei die Karte ein Modul (4) zur Identifizierung in einem Mobilfunknetz, das einen ersten Datenwert speichert, und ein Speichermodul (6) enthält, das einen zweiten Datenwert speichert, wobei die elektronische Vorrichtung (32) die Mikroschaltungskarte (2) umfasst und einen Prozessor (34) enthält, der programmiert ist, zu überprüfen, dass der erste Datenwert und der zweite Datenwert einer vorbestimmten Regel entsprechen.

## Claims

1. Method for verifying a microcircuit card (2) housed in an electronic device (32), the microcircuit card (2) comprising a module (4) for identification in a mobile telephone network and which stores a first item of data, and a storage module (6) which stores a second item of data, the method comprising a step (E30) of verifying that the first item of data and the second item of data comply with a predetermined rule.

2. Verification method according to Claim 1, comprising a step (E22) of the electronic device (32) receiving a data frame from the identification module (2), said first item of data being situated at a defined location in the received data frame.

3. Verification method according to either of Claims 1 and 2, comprising a step (E28) of reading the second item of data at a predetermined location of a data table stored in the storage module (6).

4. Method according to one of Claims 1 to 3, comprising a step of disabling the microcircuit card (2) if the first item of data and the second item of data do not comply with the predetermined rule.

5. Verification method according to one of Claims 1 to 4, wherein the verification (E30) consists in determining whether the first item of data is equivalent to the second item of data.

6. Method for customizing a microcircuit card (2) comprising a module (4) for identification in a mobile telephone network and a storage module (6), the method comprising steps of:
- retrieving (E4) an item of data stored in the storage module (6),
- recording (E6) the retrieved stored item of data in the identification module (4).

7. Method according to Claim 6, wherein the retrieved stored item of data is recorded in a dedicated storage area at a defined location in a data frame to be transmitted.

8. Method for customizing a microcircuit card (2) comprising a module (4) for identification in a mobile telephone network and a storage module (6), the method comprising steps of:
- retrieving (E12) an item of data stored in the identification module (4),
- recording (E14) the retrieved stored item of data in a predetermined location of a data table stored in the storage module (6).

9. Microcircuit card (2) comprising a module (4) for identification in a mobile telephone network and which stores a first item of data, and a storage module (6) which stores a second item of data, wherein the first item of data and the second item of data comply with a predetermined rule.

10. Microcircuit card according to Claim 9, wherein the first item of data and the second item of data are identical.

11. Electronic device (32) configured to house a microcircuit card (2), the card comprising a module (4) for identification in a mobile telephone network and which stores a first item of data, and a storage module (6) which stores a second item of data, the electronic device (32) including said microcircuit card (2) and comprising a processor (34) programmed to verify that the first item of data and the second item of data comply with a predetermined rule.
